# EUROPEAN PATENT APPLICATION

(11) **EP 4 607 665 A1**
(43) Date of publication of application: **27.08.2025**
(21) Application number: 24159483.7
(22) Date of filing: 23.02.2024
(51) Int. Cl.: H01M 50/204, H01M 50/367, H01M 50/383

(54) **BATTERY SYSTEM WITH A BATTERY PACK ARRANGED INSIDE A COFFIN**

(71) Applicant: Samsung SDI Co., Ltd., Yongin-si, Gyeonggi-do 17084 (KR)
(72) Inventor: Reinprecht, Stefan, 8144 Attendorf (AT)
(74) Representative: Gulde & Partner

(57) **Abstract**

The present disclosure refers to a battery system (100), including a coffin (10) having a battery compartment (12) and a sand-filled compartment (14) separated from the battery compartment (12); a battery pack (20) accommodated within the battery compartment (12) of the coffin (10), the battery pack (20) including a pack housing (22), a plurality of battery cells accommodated within the pack housing, and pack venting means (26) disposed at the pack housing (22) for exhausting venting gases out of the pack housing (22), wherein the sand-filled compartment (14) forms a venting channel filled with sand and adapted to guide venting gases exhausted from the pack venting means (26) to a venting outlet (30) of the coffin in case of a thermal runaway of one or more of the battery cells of the battery pack (20).

## Description

### Field of the Disclosure

The present disclosure relates to a battery system with a battery pack arranged inside a coffin for thermal protection in case of a thermal runaway. Further, the present invention relates to a vehicle as well as a stationary energy storage system including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

A battery system usually includes multiple battery packs disposed within a battery housing of the battery system. Each of the battery packs includes a plurality of battery cells and is arranged inside a sealed pack housing to separate the battery cells of the battery pack from the battery cells and electrical connections of the other battery packs of the battery system.

In case of a thermal runaway of one or more of the battery cells inside one of the battery packs, the resulting venting gases are exhausted from the battery pack via pack venting means arranged at the pack housing thereby entering the battery housing. This may lead to a heat transfer from the venting gases to the other battery packs that are disposed in the battery housing which may damage the other battery packs. In the worst case, the affected battery pack may cause further battery packs to go into thermal runaway due to thermal propagation, if the affected battery cell starts burning.

Even if the battery system includes not multiple but only one battery pack, the venting gases exhausted by the battery pack may be dangerous because they may damage any components of the battery system which are present outside of the pack housing or even outside the battery housing of the battery system. For example, bystanders may be damaged by the hot venting gases exhausted by the battery system.

It is thus an object of the present invention to overcome or reduce at least some of the drawbacks of the prior art and to provide a battery system a battery pack is sufficiently thermally isolated from the outside, for example from other battery packs of the battery system, thereby prolonging the time of life of the battery system.

### Summary of Invention

The invention is defined by the appended claims. The description that follows is subjected to this limitation. Any disclosure lying outside the scope of the claims is only intended for illustrative as well as comparative purposes.

According to one aspect of the present disclosure, a battery system is provided, the battery system including a coffin having a battery compartment and a sand-filled compartment separated from the battery compartment, a battery pack accommodated within the battery compartment, the battery pack including a pack housing, a plurality of battery cells accommodated within the pack housing, and pack venting means disposed at the pack housing for exhausting venting gases out of the pack housing, wherein the sand-filled compartment forms a venting channel filled with sand and adapted to guide venting gases exhausted from the pack venting means through the sand to a venting outlet of the coffin in case of a thermal runaway of one or more of the battery cells of the battery pack.

According to another aspect of the present disclosure, the sand in the sand-filled compartment is or includes quartz sand.

According to another aspect of the present disclosure, the coffin includes outer walls made of steel.

According to another aspect of the present disclosure, the battery pack includes a gas guide protruding from the pack housing and extending into the sand-filled compartment, wherein the pack venting means are disposed at the end of the gas guide inside the sand-filled compartment.

According to another aspect of the present disclosure, the sand-filled compartment is arranged above the battery compartment and wherein the sand-filled compartment and the battery compartment are separated from one another via a separation element that is adapted to melt when exposed to venting gases leaving the battery pack at its top in case of a breakdown of a top wall of the pack housing such that the sand from the sand-filled compartment falls onto the battery pack.

According to another aspect of the present disclosure, the separation element is adapted to melt at a temperature between 600°C and 1000°C.

According to another aspect of the present disclosure, the separation element is or includes an aluminium plate.

According to another aspect of the present disclosure, the separation element is an aluminium sandwich plate including an upper plate, a lower plate and a honeycomb structure in between the upper plate and the lower plate.

Another aspect pertains to an electric vehicle including the battery system according to any one of the preceding aspects.

Another aspect pertains stationary energy storage system including the battery system according to any one of the preceding aspects.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:

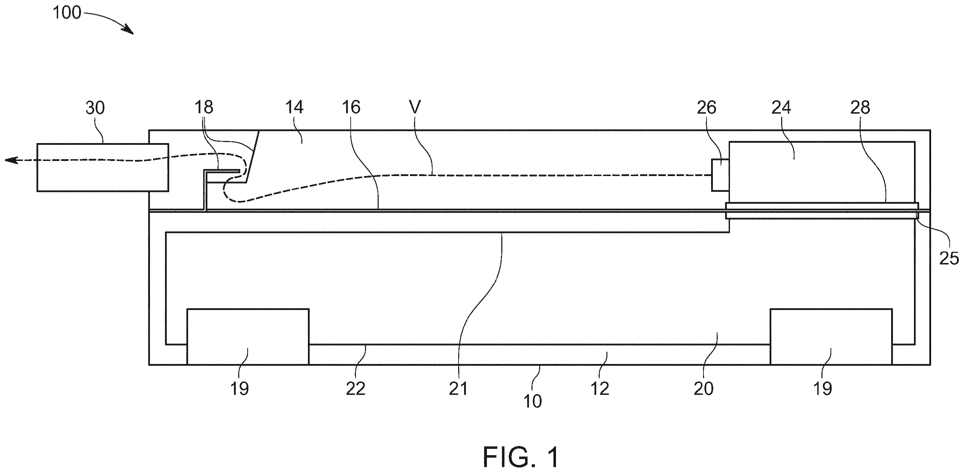

Fig. 1 illustrates a schematic sectional view of a battery system according to an embodiment.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells which are arranged, for example as stack type, to from a battery pack. The battery cells may be prismatic battery cells. The battery cells within the battery pack may be interconnected via electrical connecting means, e.g. busbars, contacting respective electrode/cell terminals of the battery cells. The battery system is an energy storage system wherein electrical energy is stored within the (electrochemical) battery cells of the battery pack. The battery pack includes a pack housing which encompasses the plurality of battery cells. Further, pack venting means are arranged at the pack housing, for example in a housing wall of the pack housing, for allowing venting gases which may be exhausted by one or more of the battery cells during a thermal runaway to leave the battery pack. The pack venting means may include a venting valve. The pack venting means are adapted to open at a predefined overpressure occurring inside the battery pack.

The battery pack is disposed inside a coffin of the battery system, more precisely inside a battery compartment of the coffin. The coffin includes, aside from the battery compartment, a sand-filled compartment. The battery compartment and the sand-filled compartment are separated from one another by a separation element, for example by a metal plate. The compartments are separated from one another such that no gas and/or material exchange can take place between the compartments, for example such that - during regular operation conditions - none of the sand can enter the battery compartment. The inside volume of the coffin may be divided, by the separation element, into two parts which form the two compartments. The sand-filled compartment may be arranged above the battery compartment, wherein in this case the separation element may be adapted to carry the weight of the sand of the sand-filled compartment. Further in this case, the separation element also shields the electrical connecting means of the battery pack from the sand, as those are normally located at the top side of the battery pack facing the separation element. The separation element may further be adapted to position the sand in the sand-filed compartment for maximum cooling effect of the venting gases. In other words, the separation element may be placed such that the sand-filled compartment is formed with a relatively long venting channel so that the venting gases need to pass through the sand for a long distance thereby transferring a lot of heat energy to the sand. The battery system may include a battery housing accommodating the coffin. Also, the battery housing may accommodate further battery packs, one or more of which may be disposed in such a coffin as well. The coffin is a sealed container which seals the elements accommodated within the coffin from the outside/environment of the coffin and the outside/environment of the coffin from the elements accommodated within the coffin. Thus, in other words, the coffin is a sealed container. The coffin includes a venting outlet for allowing the venting gases, exhausted by the battery pack into the coffin, to exit the coffin. For this purpose, the venting outlet may include an overpressure valve. The coffin may be made of a heat-resistant material.

The sand-filled compartment of the coffin according to the invention is arranged and adapted such that it guides the venting gases exiting the battery pack through the pack venting means to the venting outlet of the coffin. In other words, the venting gases are exhausted by the battery pack through the pack venting means into the sand-filled compartment of the coffin, pass through the sand inside the sand-filled compartment along the venting channel that is formed by the sand-filled compartment towards the venting outlet of the coffin and leave the sand-filled compartment and thus the coffin through the venting outlet. The sand-filled compartment thus forms a venting channel for the venting gases, leading the venting gases leaving the battery pack via the pack venting means towards the venting outlet.

With the battery system of the invention, the battery pack is placed inside the coffin thereby isolating the battery pack from any other battery packs of the battery system. Venting gases exhausted by one or more of the battery cells of the battery pack during a thermal runaway are guided through the sand of the sand-filled compartment of the coffin before they leave the coffin and are thereby cooled down because heat is transferred from the venting gases to the sand. That is, the sand in the sand-filled compartment serves as a thermal mass if the battery pack goes into a thermal runaway. The sand cools the venting gases to temperatures low enough to prevent damage to any components of the battery system outside of the coffin, for example to temperatures below 500°C. Thus, the battery system with the sand-filled compartment, may be adapted to cool the venting gases to temperatures of 500°C or below. This may be achieved by choosing the amount and/or type of sand and the length of the venting channel respectively. As the venting gases are cooled down by the sand before leaving the coffin, thermal propagation to further battery packs may be reduced and self-ignition of further battery packs may be prevented. Additionally, the sand may filter particles from the venting gases which may contribute to the cooling and may prevent these particles damaging any external components. Also, bystanders may be protected as the venting gases exhausted from the battery system are of lower temperature. As the further battery packs are protected from the venting gases, the time of life of these further battery packs and thus of the battery system are prolonged.

According to an aspect of the present disclosure, the sand in the sand-filled compartment includes quartz sand. Also, all of the sand in the sand-filled compartment may be quartz sand. Quartz sand may be suited as a thermal mass, i.e. as a recipient for the heat transferred from the venting gases. Also, quartz sand may be suited for filtering particles from the venting gases.

According to an aspect of the present disclosure, the coffin includes outer walls made of steel. A coffin with steel walls provides for sufficient heat-resistance and structural stability of the coffin. Such a coffin may withstand the high temperatures of the venting gases of about 1000°C. The steel coffin may thus maintain its structural stability and the isolation towards the outside even if the venting gases should enter the battery compartment due to a failure or breakdown of the pack housing.

According to an aspect of the present disclosure, the battery pack includes a gas guide protruding from the pack housing and extending into the sand-filled compartment, wherein the pack venting means are disposed at the end of the gas guide inside the sand-filled compartment. In other words, the gas guide is an element of the battery pack or of the battery pack housing, which extends from the battery compartment where the battery pack is arranged into the sand-filled compartment. The gas guide thus passes the separation element separating the two compartments. For example, the separation element may include a through-hole through which the gas guide may extend. A sealing element may be provided at the through-hole sealing the outer surface of the gas guide towards the through-hole to keep the separation between the two compartments, for example to prevent sand getting into the battery compartment. The gas guide guides the venting gases exiting the one or more battery cells during a thermal runaway away from the battery cells and into the sand-filled compartment, wherein the venting gases may enter the sand-filled compartment when exiting through the pack venting means. This way the venting gases are introduced into the sand-filled compartment in a constructively simple manner.

According to an aspect of the present disclosure, the sand-filled compartment is arranged above the battery compartment. The arrangement "above" refers to a placement of the battery system under regular operating conditions, for example when mounted inside an electric vehicle. As explained above, the sand-filled compartment and the battery compartment are separated from one another via a separation element. According to the present embodiment, the separation element is adapted to melt when exposed to any venting gases leaving the battery pack at its top in case of a breakdown of a top wall, e.g. a cover plate, of the pack housing. During a thermal runaway of multiple battery cells, the temperatures inside the battery pack may rise to 1000°C and more for a problematic amount of time which may lead to a significant amount of heat energy being transferred to the pack housing, for example to the top wall of the pack housing if the battery cells vent towards the top wall (i.e. have their venting exits at their respective top). In the worst case, the batter pack may start burning. The top wall of the pack housing may break down in such a case meaning that the structural integrity of the top wall is reduced so much that venting gases leave the battery pack through the top wall an enter into the battery compartment of the coffin. The outer walls of the coffin may withstand these temperatures as they are preferably made of steel. According to the present embodiment, the separation element, however, cannot withstand these temperatures but rather melts when in contact with the venting gases long enough. As the separation element melts, the sand from the sand-filled compartment may enter the battery compartment and may fall or trickle down onto the battery pack due to gravity. This may extinguish or dampen the fire of the burning battery pack and may limit further heat propagation. In other words, the sand may suppress flames which may occur during burning of the battery pack. As long as the venting gases do not enter the battery compartment but are instead, as intended, channeled through the sand-filled compartment, the integrity of the separation element is not impaired, even when the venting gases come in contact with the separation element from the other side, because the temperature of the venting gases is lower at that point due to the heat transfer to the sand. In this embodiment, the sand-filled compartment serves two purposes: Firstly, cooling down the venting gases passing through the sand-filled compartment, and secondly, serving as a fire extinguisher if the pack housing breaks down and the battery pack starts burning. The sand falling onto the battery pack may also extinguishes any electrical arcs that may occur between the cells and/or electrical connecting means. Thus, the thermal isolation of the battery pack from the further components of the battery system, for example from further battery packs, is further improved.

According to a respective aspect of the present disclosure, the separation element is adapted to melt at a temperature between 600°C and 1000°C. The material and/or structure of the separation element may be chosen such as to achieve that the separation element melts at the temperatures. According to a respective aspect, the separation element is or includes an aluminium plate. Aluminium has a suitable melting temperature of about 660°C. The separation element may be an aluminium sandwich plate including an upper plate, a lower plate and a honeycomb structure in between the upper plate and the lower plate. Such a separation element is suited to fulfill the above-mentioned purposes. Such a separation element may melt when in contact with the hot venting gases of about 1000°C which leave the top side of the battery pack if the top wall of the battery pack breaks down, as explained above. Further, such a separation element may provide a sufficient structural integrity to carry the weight of the sand while being relatively light-weight.

The invention also pertains to an electric vehicle including a battery system according to the invention, the battery system being used, for example, as a traction battery.

The invention also pertains to a stationary energy storage system including the battery system according to the invention. Such a stationary energy storage system may serve as a local electrical energy storage, for example to support an electrical grid. The battery system according to the invention may be suited to be used first as a (traction) battery for an electric vehicle and afterwards, as a second life, as a stationary energy storage because batteries usually reach their end of life for the use in electric vehicles when they reach a maximum capacity of 80% from their original capacity. The battery system according to the invention, however, is still fitting for other purposes, such as the explained energy storage system to support the power grid.

### Specific Embodiments

Fig. 1 is a sectional view illustrating a battery system 100 according to an embodiment of the invention. The battery system 100 includes a coffin 10 having a battery compartment 12 and a sand-filled compartment 14, the battery compartment 12 and a sand-filled compartment 14 being separated from one another via a separation element 16. The separation element 16 ensures that the sand stays, during regular operation conditions, inside the sand-filled compartment 14 and does not enter the battery compartment 12. The outer walls of the coffin 10 are made of steel, for example. One of the outer walls of the coffin 10 includes a venting outlet 30.

A battery pack 20 is accommodated within the battery compartment 12 of the coffin 10, the battery pack 20 including a pack housing 22, a plurality of battery cells (not shown) accommodated within the pack housing 22, a gas guide 24 protruding from the pack housing 22 and extending into the sand-filled compartment 14 through a through-hole 25 of the separation element 16, and pack venting means (or element) 26 disposed at the end of the gas guide 24. To ensure the separation between the compartment 12, 14 via the separation element 16, the gas guide includes a sealing 28 which seals an outer surface of the gas guide 24 towards the through-hole 25 of the separation element 16. The battery pack 20 may be fixed to the coffin 10 via fixation elements 19.

The Figure shows the battery system 100 in an arrangement as it would be mounted inside an electric vehicle or be used as a stationary energy storage system. As can be seen in the Figure, the sand-filled compartment 14 is arranged above the battery compartment 12. For example, the separation element 16 consists of an aluminium sandwich plate including an upper plate, a lower plate and a honeycomb structure in between the upper plate and the lower plate (not shown). The separation element 16 is adapted to melt at temperatures between 600°C and 1000°C, for example, at around 660°C.

The coffin 10 isolates the battery pack 20 towards the outside, for example towards other components of the battery system 100 such as further battery packs. During a thermal runaway of one or more of the battery cells of the battery pack 20, venting gases leave the affected battery cells at their topside flowing towards a top wall 21 of the pack housing 22, along the gas guide 24 and leave the battery pack 20 via the pack venting means 26 thus entering the sand-filled compartment 14. The sand-filled compartment 14 forms a venting channel filled with sand and is adapted to guide the venting gases exhausted from the pack venting means 26 to the venting outlet 30 of the coffin 10 along a venting stream direction V as shown via the dashed arrow in the Figure.

As the venting gases flow along the venting stream direction V through the sand in the sand-filled compartment 14, the venting gases transfer heat energy to the sand and are thus cooled. When leaving the venting outlet 30, the venting gases have cooled down from temperatures of more than 1000°C when leaving the battery cells to temperatures below 500°C. The venting gases exiting the venting outlet 30 do therefore no longer include a danger to components outside of the coffin 10 as e.g. other battery packs. Therefore, thermal propagation of the thermal runaway event to other battery packs of the battery system is thus prevented.

A retention element 18 may be provided at the end of the sand-filled compartment 14 to keep a distance to the venting outlet 30 and to ensure the sand stays inside the sand-filled compartment 14.

If the plurality of battery cells of the battery pack 20 experience a thermal runaway, a maximum thermal load of the top wall 21 of the pack housing 22 may be exceeded leading to a breakdown of the top wall 21 such that venting gases leave through the top wall 21 and enter the battery compartment 12. In such a case, the venting gases having temperatures of more than 1000°C come into contact with the separation element 16 which leads to melting of the separation element 16. As a result, the sand trickles down from the sand-filled compartment 14 onto the top side (and what remains of the top wall 21) of the pack housing 22 thereby extinguishing any fires which may occur in such a situation and preventing electrical arcing between electrical connecting means (not shown) of the battery pack 20 which are usually arranged at the top side.

Thus, with the battery system 100 the battery pack 20 is sufficiently thermally isolated from other elements of the battery system, for example from other battery packs thereby prolonging the time of life of the battery system 100.

### Reference signs

- 10: coffin
- 12: battery compartment
- 14: sand-filled compartment
- 16: separation element
- 18: retention element
- 19: fixation elements
- 20: battery pack
- 21: top wall
- 22: pack housing
- 24: gas guide
- 25: through-hole
- 26: pack venting means/element
- 28: sealing
- 30: venting outlet
- 100: battery system
- V: venting stream direction

## Claims

1. A battery system (100), comprising:
a coffin (10) having a battery compartment (12) and a sand-filled compartment (14) separated from the battery compartment (12);
a battery pack (20) accommodated within the battery compartment (12), the battery pack (20) comprising a pack housing (22), a plurality of battery cells accommodated within the pack housing, and pack venting means (26) disposed at the pack housing (22) for exhausting venting gases out of the pack housing (22),
wherein the sand-filled compartment (14) forms a venting channel filled with sand and adapted to guide venting gases exhausted from the pack venting means (26) through the sand to a venting outlet (30) of the coffin in case of a thermal runaway of one or more of the battery cells of the battery pack (20).

2. The battery system (100) according to claim 1, wherein the sand in the sand-filled compartment (14) is or comprises quartz sand.

3. The battery system (100) according to claim 1 or 2, wherein the coffin (10) comprises outer walls made of steel.

4. The battery system (100) according to any one of the preceding claims, wherein the battery pack (20) comprises a gas guide (24) protruding from the pack housing (22) and extending into the sand-filled compartment (14), wherein the pack venting means (26) are disposed at the end of the gas guide (24) inside the sand-filled compartment (14).

5. The battery system (100) according to any one of the preceding claims, wherein the sand-filled compartment (14) is arranged above the battery compartment (12) and wherein the sand-filled compartment (14) and the battery compartment (12) are separated from one another via a separation element (16) that is adapted to melt when exposed to venting gases leaving the battery pack (20) at its top in case of a breakdown of a top wall (21) of the pack housing (22) such that the sand from the sand-filled compartment (14) falls onto the battery pack (20).

6. The battery system (100) according to claim 5, wherein the separation element (16) is adapted to melt at a temperature between 600°C and 1000°C.

7. The battery system (100) according to claim 5 or 6, wherein the separation element (16) is or comprises an aluminium plate.

8. The battery system (100) according to any one of claims 5 to 7, wherein the separation element (16) is an aluminium sandwich plate comprising an upper plate, a lower plate and a honeycomb structure in between the upper plate and the lower plate.

9. An electric vehicle comprising the battery system (100) according to any one of the preceding claims.

10. A stationary energy storage system comprising the battery system (100) according to any one claims 1 to 8.
